# EUROPÄISCHE PATENTSCHRIFT

(11) **EP 1 595 080 B1**
(45) Veröffentlichungstag und Bekanntmachung des Hinweises auf die Patenterteilung: **08.11.2006**
(21) Anmeldenummer: 03732265.8
(22) Anmeldetag: 18.02.2003
(51) Int. Cl.: F16B 25/10, F16B 33/02, B21K 1/44, B21K 1/56, F16B 35/04

(54) **GEWINDESCHNEIDENDE SCHRAUBE**
THREAD-CUTTING SCREW
VIS TARAUDEUSE

(43) Veröffentlichungstag der Anmeldung: 16.11.2005
(73) Patentinhaber: TOGE-Dübel A. Gerhard KG, 90431 Nürnberg (DE)
(72) Erfinder: GERHARD, Anton, 90427 Nürnberg (DE)
(74) Vertreter: Rau, Albrecht
(86) Internationale Anmeldenummer: PCT/EP2003/001609
(87) Internationale Veröffentlichungsnummer: WO 2004/074697

(56) Entgegenhaltungen:
- WO-A-00/29754
- WO-A-01/98672

## Beschreibung

Die Erfindung betrifft eine gewindeschneidende Schraube gemäß dem Oberbegriff des Anspruchs 1.

Eine derartige Schraube ist z. B. aus der EP 1129 297 A (entsprechend US 6 599 072 B1) bzw. aus der WO-A-00/29754 bzw. aus der DE-A-198 52 338) bekannt. Dort sind als Schneid-Einsatz-Stifte ausgeführte Schneidelemente im Gewinde der Schraube vorgesehen. Derartige Schrauben haben eine gute schneidende Wirkung, sind jedoch, insbesondere im Blick auf die Verbindung der Schneid-Einsatz-Stifte mit dem Kern, relativ aufwendig zu fertigen.

Daneben sind durch offenkundige Vorbenutzung gewindeschneidende Schrauben bekannt, die zur Steigerung ihrer Festigkeit aufgekohlt, d. h. in ihrem Kohlenstoffanteil angereichert, und anschließend gehärtet werden. Wie die Praxis gezeigt hat, neigen derartige Schrauben zu Sprödbrüchen. Hierfür wird in den Kern eindringender Wasserstoff verantwortlich gemacht, der die Mikrostruktur des Schraubenmaterials schädigt.

Aufgabe der vorliegenden Erfindung ist es, eine Schraube der eingangs genannten Art derart weiterzubilden, dass die Verbindung der Schneidelemente am Kern weniger anspruchsvoll hinsichtlich des Fertigungsaufwandes ist, wobei gleichzeitig die Sprödbruchgefährdung, die bei den anderen bekannten gewindeschneidenden Schrauben auftritt, vermieden werden soll.

Diese Aufgabe ist erfindungsgemäß gelöst durch eine Schraube mit den im Kennzeichnungsteil des Anspruchs 1 angegebenen Merkmalen.

Erfindungsgemäß wurde erkannt, dass das mindestens eine Schneidelement auch als Schweißkörper ausgeführt sein kann, wobei durch das Anschweißen des Schneidelements an der Schraube eine relativ unaufwendige Verbindung geschaffen ist, die gleichzeitig den Schneidanforderungen z. B. beim Einschrauben in eine Betonwand voll entspricht. Da die Schraube nur örtlich scharf definiert mit Schneidelementen mit höherem Kohlenstoffanteil versehen wird, kann auf ein Aufkohlen der Schraube, wie dies beim Stand der Technik erfolgte, verzichtet werden. Überraschenderweise kann dadurch, wie Versuche gezeigt haben, die Sprödbruchgefährdung vermieden werden. Dies wird damit begründet, dass die Schraube durch das Anschweißen der Schneidelemente nur örtlich scharf begrenzt erhitzt wird, was offenbar eine wasserstoffinduzierte Rissbildung vermeidet. Kernmaterial mit einem Kohlenstoffanteil zwischen 0 und 0,5 Gew.-% lässt sich mit vertretbarem Aufwand formend bearbeiten. Schneidelemente aus einem Material mit einem Kohlenstoffanteil, der größer ist als 0,8 Gew.-%, weisen eine für das Gewindeschneiden schon ausreichende Härte auf.

Kernmaterialien gemäß Anspruch 2 lassen sich desto besser formend bearbeiten, je geringer der Kohlenstoffanteil ist. Auch Materialien ohne Kohlenstoffanteil, z. B. Reinmetalle wie Aluminium oder Messing, können als Kernmaterial zum Einsatz kommen.

Schneidelemente gemäß Anspruch 3 zeigen weiterhin eine für das Schneiden umso vorteilhaftere hohe Härte, je höher der Kohlenstoffanteil ist.

Eine Anordnung bzw. Anzahl der Schneidelemente gemäß den Ansprüchen 4 und 5 hat sich weiterhin für ein sicheres Einschneiden der Schraube als ausreichend erwiesen.

Ein Anschneidelement gemäß Anspruch 6 führt weiterhin zu einem kontrollierten Schneidvorgang.

Ein Anschneidelement gemäß Anspruch 7 ist besonders robust.

Überstände gemäß den Ansprüchen 8 und 9 haben sich weiterhin als guter Kompromiss zwischen einer guten Schneidwirkung der Schneidelemente einerseits und einem festen Sitz der Schraube nach dem Einschneiden andererseits herausgestellt. Derartige Überstände sind jedoch nicht zwingend.

Nachträgliches Vergüten nach Herstellung und Formung des Kernmaterials gemäß Anspruch 10 kann die Schneideigenschaften der Schraube nochmals verbessern. Ein derartiger nachträglicher Vergütungsvorgang ist jedoch nicht für alle Anwendungen und Ausgestaltungen zwingend. Das Anschweißen der Schneidelemente auf ein vergütetes Kernmaterial führt zu keiner Änderung der vergüteten Materialstruktur.

Ausführungsbeispiele der Erfindung werden nachfolgend anhand der Zeichnung näher erläutert. In dieser zeigen:
- Fig. 1: eine Seitenansicht einer Schraube;
- Fig. 2: einen gebrochenen Schnitt gemäß Linie II-II in den Figuren 1 und 3 in vergrößertem Maßstab;
- Fig. 3: einen gebrochenen Schnitt gemäß Linie III-III in Figur 2 in vergrößertem Maßstab;
- Fig. 4: einen zu Figur 3 ähnlichen Schnitt durch eine weitere Ausführungsform der Schraube; und
- Fig. 5: einen zu Figur 3 ähnlichen Schnitt durch noch eine weitere Ausführungsform der Schraube.

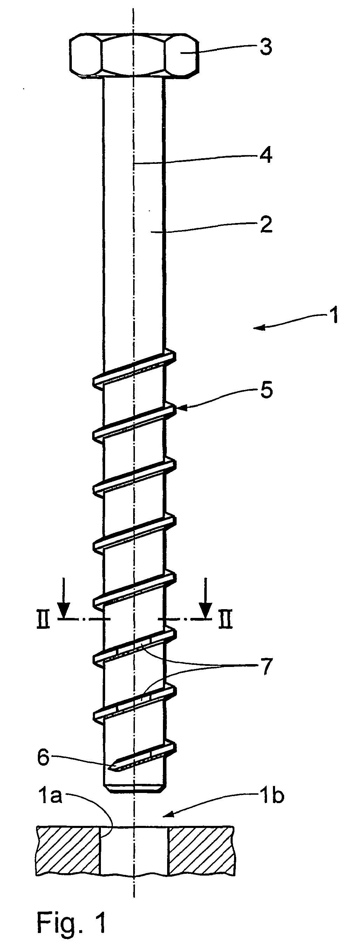

Bei der in Fig. 1 dargestellten gewindeschneidenden Schraube 1 handelt es sich um eine Betonschraube, die insbesondere zum Einschrauben in eine Bohrlochwand 1a eines Bohrlochs 1b geeignet ist. Die Schraube 1 hat einen zylindrischen Kern 2 aus Baustahl mit einem Kohlenstoffanteil im Bereich von 0,18 Gew.-%. Derartige Stahle sind bekannt. Die Schraube 1 hat einen Kerndurchmesser für einen Bohrlochdurchmesser von 10 mm. Auch andere Durchmesser bis hin z. B. zu 30 mm Kerndurchmesser sind möglich. An einem Ende des Kerns 2 ist ein in bekannter Weise sechseckig ausgeführter Kopf 3 angeformt. Der Kern hat eine Mittel-Längs-Achse 4, die in Fig. 1 gestrichelt angedeutet ist.

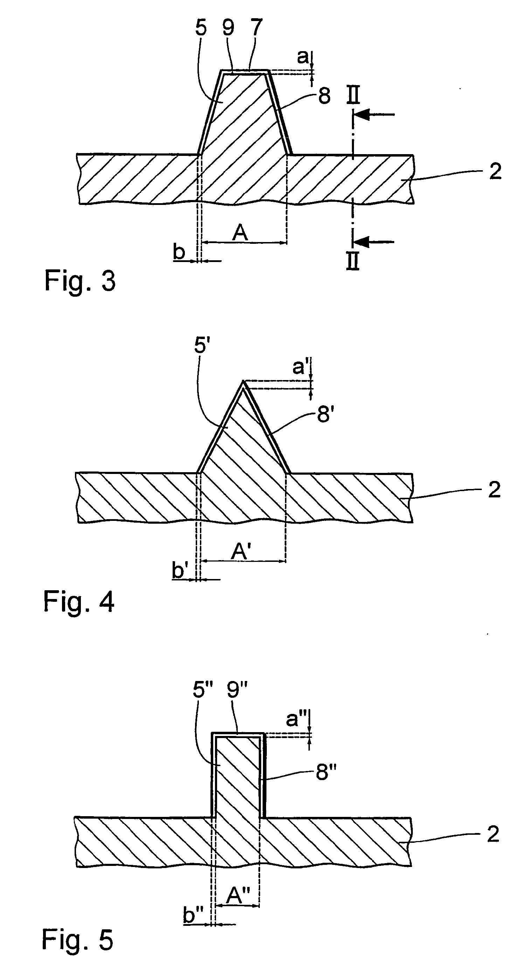

Von dem Kopf 3 gegenüberliegenden Ende der Schraube 1 bis ungefähr mittig zwischen den beiden Enden weist der Kern 2 ein einstückig mit diesem ausgebildetes Gewinde 5 auf. Dieses ist als Trapezgewinde ausgeführt (vgl. Fig. 3).

Der beim Einschrauben der Schraube 1 in das Bohrloch führende Abschnitt des Gewindes 5 ist als Anschneidelement 6 ausgebildet. Letzteres ist genauso wie weitere Schneidelemente 7 im Verlauf der dem Anschneidelement 6 folgenden drei Gewindegänge des Gewindes 5 als Schweißkörper aus Schnellarbeitsstahl mit einem Kohlenstoffanteil, der größer ist als 0,8 Gew.-%, in diesem Fall mit einem Kohlenstoffanteil von 0,85 Gew.-%, ausgeführt. Das Anschneidelement 6 hat dabei, verglichen mit den anderen Schneidelementen 7, eine größere Erstreckung längs des Gewindes 5, wie aus Fig. 1 hervorgeht. Das Anschneidelement 6 formt beim Einschrauben sofort ein Gewinde mit definierter Steigung in die Bohrlochwand, was eine präzise Führung der eingeschraubten Schraube 1 ermöglicht. Die Funktion des Anschneidelements 6 kann hierbei mit derjenigen der Spitze einer Holzschraube verglichen werden. Pro Gewindegang sind dem Anschneidelement 6 drei Schneidelemente 7 nachgeordnet, wobei nur die ersten drei Gewindegänge des Gewindes 5 Schneidelemente 7 tragen, sodass insgesamt neun Schneidelemente 7 vorliegen, von denen in Fig. 1 zwei sichtbar sind.

Die Schneidelemente 6, 7 sind derart in das Gewinde 5 eingeschweißt, dass sie dieses harmonisch fortsetzen. Die Schneidelemente 6, 7 stehen dabei leicht über das sonstige Gewinde 5 sowohl in zur Mittel-Längs-Achse axialer als auch in zur Mittel-Längs-Achse 4 radialer Richtung über.

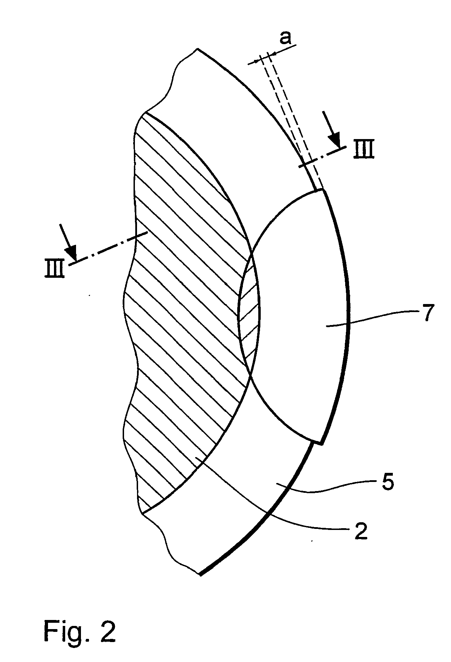

Die genannten Überstände sind besonders anschaulich in den Fig. 2 und 3 dargestellt. Das Schneidelement 7 hat bedingt durch den Schweißvorgang bei der Anbringung von diesem am Gewinde 5 eine in etwa wannenförmige Form, wobei der Wannenboden des Schneidelements 7 bis in den Kern 2 eindringt. Das Schneidelement 7 steht über Flanken 8 und über eine Stirnwand 9 des Gewindes 5 über. Der radiale Überstand des Schneidelements 7 über das Gewinde 5 ist in Fig. 2 mit a bezeichnet. Bei der Schraube 1 beträgt der Überstand a des Schneidelements 5 % der Gewindetiefe.

In Fig. 3 ist ein Teil eines die Mittel-Längs-Achse 4 enthaltenden Schnitts durch die Schraube 1 dargestellt, wobei die Schnittebene in unmittelbarer Nachbarschaft des Schneidelements 7 von Fig. 2 liegt. Neben dem radialen Überstand a ist in Fig. 3 auch der axiale Überstand b des Schneidelements 7 über das Gewinde 5 sichtbar. Dieser ist in Fig. 3 in Richtung eines Abstands A, den Gewindeflanken 8 des Gewindes 5 am Übergang in den Kern 2 zueinander aufweisen, aufgetragen und mit b bezeichnet. Bei der Schraube 1 beträgt der Überstand b 5 % des Abstands A.

Die Gewindetiefe sowie der Abstand A betragen beim Gewinde 5 ca. 2 mm. Die Überstände a, b betragen daher ca. 0,1 mm. Auch andere Überstände, z. B. 0,2 mm oder 0,3 mm, können je nach Kerndurchmesser und Gewindetiefe gewählt werden.

Für den Kern 2 können auch andere Stähle, z. B. mit einem Kohlenstoffanteil, der geringer ist als 0,5 Gew.-%, also z. B. 0,42 Gew.-%, oder der geringer ist als 0,35 Gew.-%, also z. B. 0,30 Gew.-%, oder der geringer ist als 0,25 Gew.-%, also z. B. 0,22 Gew.-%, oder der geringer ist 0,2 Gew.-%, z. B. 0,18 Gew.-%, oder der geringer ist als 0,15 Gew.-%, z. B. 0,12 Gew.-%, eingesetzt werden. Je nach den Anforderungen an die Verformbarkeit des Materials zur Herstellung des Kerns 2 und dem Gewinde 5 vor dem Anbringen der Schneidelemente 6, 7 kann derjenige Stahl gewählt werden, der aufgrund seines Kohlenstoffanteils den jeweiligen Anforderungen entspricht.

Auch Materialien ohne Kohlenstoffanteil, z. B. Aluminium oder Messing, können als Kernmaterial eingesetzt werden.

Als Material für die Schneidelemente 6, 7 können auch andere Stähle mit einem Kohlenstoffanteil, der größer ist als 1,0 Gew.-%, z. B. 1,2 Gew.-%, oder der größer ist als 1,5 Gew.-%, z. B. 1,8, 2,0 oder 2,5 Gew.-%, eingesetzt werden. Je höher der Kohlenstoffanteil ist, desto härter sind die Schneidelemente 6, 7.

Bei alternativen Schrauben können auch weniger Schneidelemente 7, z. B. vier Schneidelemente oder sechs Schneidelemente eingesetzt werden.

Bei alternativen Schrauben können die Schneidelemente 7 auch auf weniger Gewindegänge verteilt sein, z. B. nur auf den letzten zwei Gewindegängen. Bei einer weiteren Variante der Schraube kann eine Verteilung der Schneidelemente 7 auch z. B. auf den letzten fünf Gewindegängen erfolgen.

Die Anzahl und Verteilung der Schneidelemente 6, 7 auf dem Gewinde 5 richtet sich nach der Geometrie der Schraube 1, des Gewindes 5 sowie nach dem Material der Bohrloch-Wand. Insbesondere können bei einem größeren Kerndurchmesser mehrere Schneidelemente 6, 7 pro Gewindegang vorgesehen sein.

Die Schraube 1 wird folgendermaßen hergestellt: Zunächst wird der Kern 2 mit einem einstückig hieran angeformten Roh-Gewinde und dem Kopf 3 durch Walzen und Pressen vorgeformt. Das Kernmaterial wird vergütet, worauf bei Schrauben mit größerem Durchmesser, z. B. bei Schrauben mit einem Kerndurchmesser für ein Bohrloch größer als 16 mm, verzichtet werden kann. Nach der Formung des Gewindes 5 werden die Schneidelemente 6, 7 in das Gewinde 5 eingeschweißt.

In den Fig. 4 und 5 sind weitere Ausgestaltungen erfindungsgemäßer Schrauben dargestellt. Elemente, die denjenigen entsprechen, die schon unter Bezugnahme auf die Fig. 1 bis 3 beschrieben wurden, tragen die gleichen Bezugszeichen mit hochgestellten Strichen und werden nicht nochmals im Einzelnen erläutert.

Fig. 4 zeigt ein als Spitzgewinde ausgeführtes Gewinde 5'. Das Schneidelement 7 steht über die beiden Dreiecksflanken 8' des Gewindes 5' über. Der Überstand des Schneidelements 7 über die Spitze des Gewindes 5' senkrecht zur Mittel-Längs-Achse 4 ist mit a' bezeichnet.

Fig. 5 zeigt ein als Flachgewinde ausgeführte Gewinde 5" einer weiteren Ausführungsform. Das Schneidelement 7 steht über die in diesem Falle parallel zu zueinander liegenden Gewindeflanken 8" und über die Stirnwand 9" über.

## Patentansprüche

1. Gewindeschneidende Schraube (1), insbesondere Betonschraube, zum Einschrauben in die Bohrloch-Wand (1a) eines Bohrlochs (1b)
- mit einem im Wesentlichen zylindrischen Kern (2) aus Metall mit einer Mittel-Längs-Achse (4),
- mit einem einstückig mit dem Kern (2) ausgebildeten Gewinde (5, 5', 5"),
- mit mindestens einem im Gewinde (5, 5', 5 ") angeordneten Schneidelement (6, 7) zum schneidenden Eingriff mit der Bohrloch-Wand, wobei
-- der Kern (2) aus einem Metall mit einem Kohlenstoffanteil zwischen größer 0 und 0,5 Gew.-% besteht,
-- das mindestens eine Schneidelement (6, 7) fest mit dem Kern (2) verbunden ist,
**dadurch gekennzeichnet, dass**
- das Schneidelement (6, 7) als mit dem Gewinde (5, 5', 5") verbundener Schweißkörper aus einem Metall mit einem Kohlenstoffanteil ausgebildet ist, der größer ist als 0,8 Gew.-%.

2. Schraube nach Anspruch 1, **dadurch gekennzeichnet, dass** der Kern (2) aus einem Metall mit einem Kohlenstoffanteil besteht, der geringer ist als 0,35 Gew.-%, insbesondere geringer als 0,25 Gew.-%, besonders bevorzugt geringer als 0,2 Gew.-%, noch stärker bevorzugt geringer als 0,15 Gew.-%, noch stärker bevorzugt geringer als 0,1 Gew.-%.

3. Schraube nach Anspruch 1, **dadurch gekennzeichnet, dass** das Schneidelement (6, 7) aus einem Metall mit einem Kohlenstoffanteil besteht, der größer ist als 1,0 Gew.-%, insbesondere größer als 1,5 Gew.-% oder größer als 2,0 Gew.-%.

4. Schraube nach Anspruch 1, **dadurch gekennzeichnet, dass** Schneidelemente (6, 7) nur auf den letzten fünf Gewindegängen des Gewindes (5, 5', 5"), insbesondere auf den letzten drei, besonders bevorzugt auf den letzten zwei Gewindegängen, angeordnet sind.

5. Schraube nach Anspruch 1, **dadurch gekennzeichnet, dass** insgesamt weniger als 15 Schneidelemente (6, 7), insbesondere weniger als 10 Schneidelemente (6, 7), besonders bevorzugt weniger als fünf Schneidelemente (6, 7), vorgesehen sind.

6. Schraube nach Anspruch 1, **gekennzeichnet durch** ein Anschneidelement (6) an dem dem schneidenden Ende der Schraube (1) zugeordneten Ende des Gewindes (5, 5', 5").

7. Schraube nach Anspruch 6, **dadurch gekennzeichnet, dass** das Anschneidelement (6) verglichen mit den anderen Schneidelementen (7) eine größere Erstreckung längs des Gewindes (5, 5', 5") aufweist.

8. Schraube nach Anspruch 1, **dadurch gekennzeichnet, dass** das mindestens eine Schneidelement (6, 7) radial zu der Mittel-Längs-Achse (4) gegenüber dem Gewinde (5, 5', 5") übersteht, wobei der Überstand (a, a', a") des Schneidelements höchstens 15 % der Gewindetiefe beträgt.

9. Schraube nach Anspruch 1, **dadurch gekennzeichnet, dass** das mindestens eine Schneidelement (6, 7) axial in Richtung der Mittel-Längs-Achse (4) gegenüber dem Gewinde (5, 5', 5") übersteht, wobei der Überstand (b, b', b") des Schneidelements (6, 7) höchstens 15 % des Abstandes (A, A', A") beträgt, den Gewindeflanken (8, 8', 8") des Gewindes (5, 5', 5") am Übergang zum Kern (2) zueinander aufweisen.

10. Schraube nach Anspruch 1, **dadurch gekennzeichnet, dass** der Kern (2) und/oder das Schneidelement (6, 7) aus nachträglich vergütetem Material bestehen.

## Claims

1. A thread-cutting screw (1), in particular concrete screw, for being screwed into the bore-hole wall (1a) of a bore hole (1b), comprising
- a substantially cylindrical core (2) of metal with a central longitudinal axis (4);
- a thread (5, 5', 5") which forms one piece with the core (2);
- at least one cutting element (6, 7) which is disposed within the thread (5, 5', 5") for cutting engagement with the bore-hole wall,
-- with the core (2) consisting of a metal having a carbon content in a range between greater than 0 and 0.5 percent by weight, and
-- with the at least one cutting element (6, 7) being fixedly connected to the core (2);
**characterized**
- **in that** the cutting element (6, 7) is a welded structure, united with the thread (5, 5', 5"), of a metal with a carbon content that exceeds 0.8 percent by weight.

2. A screw according to claim 1, **characterized in that** the core (2) consists of a metal with a carbon content of less than 0.35 percent by weight, in particular less than 0.25 percent by weight, by special preference less than 0.2 percent by weight, still more preferably less than 0.15 percent by weight, and even more preferably less than 0.1 percent by weight.

3. A screw according to claim 1, **characterized in that** the cutting element (6, 7) consists of a metal with a carbon content exceeding 1.0 percent by weight, in particular exceeding 1.5 percent by weight or exceeding 2.0 percent by weight.

4. A screw according to claim 1, **characterized in that** cutting elements (6, 7) are disposed only on the last five flights of the thread (5, 5', 5"), in particular on the last three flights, by special preference on the last two flights.

5. A screw according to claim 1, **characterized in that** provision is made for a total of less than 15 cutting elements (6, 7), in particular less than 10 cutting elements (6, 7), by special preference less than five cutting elements (6, 7).

6. A screw according to claim 1, **characterized by** a pilot cutting element (6) at the end of the thread (5, 5', 5") that is allocated to the cutting end of the screw (1).

7. A screw according to claim 6, **characterized in that** the pilot cutting element (6), as compared to the other cutting elements (7), has a greater length along the thread (5, 5', 5").

8. A screw according to claim 1, **characterized in that** the at least one cutting element (6, 7) projects over the thread (5, 5', 5") radially of the central longitudinal axis (4), with the projection (a, a', a") of the cutting element being maximally 15 percent of the depth of thread.

9. A screw according to claim 1, **characterized in that** the at least one cutting element (6, 7) projects over the thread (5, 5', 5") axially in the direction of the central longitudinal axis (4), with the projection (b, b', b") of the cutting element (6, 7) amounting to maximally 15 percent of the distance (A, A', A") that the flanks (8, 8', 8") of the thread (5, 5', 5") have from each other when passing into the core (2).

10. A screw according to claim 1, **characterized in that** the core (2) and/or the cutting element (6, 7) consist of a material subsequently quenched and tempered.

## Revendications

1. Vis taraudeuse (1), en particulier vis pour béton, destinée à être vissée dans la paroi de forure (1a) d'une forure (1b),
- avec un noyau (2) essentiellement cylindrique en métal doté d'un axe longitudinal médian (4),
- avec un filet (5, 5', 5") formé d'un tenant avec le noyau (2)
- avec au moins un élément coupant (6, 7) disposé dans le filet (5, 5', 5") pour l'engrènement coupant avec la paroi de forure, étant précisé que
- le noyau (2) se compose d'un métal avec une part de carbone comprise entre 0 et 0,5 % en poids,
- au moins l'un des éléments coupants (6, 7) est relié de manière fixe au noyau (2),
**caractérisée en ce que**
- l'élément coupant (6, 7) est formé comme corps soudé relié au filet (5, 5', 5") constitué d'un métal avec une part de carbone supérieure à 0,8 % en poids.

2. Vis selon la revendication 1, **caractérisée en ce que** le noyau (2) se compose d'un métal avec une part de carbone inférieure à 0,35 % en poids, en particulier inférieure à 0,25 % en poids, particulièrement de préférence inférieure à 0,2 % en poids, encore plus préférablement inférieure à 0,15 % en poids, encore plus préférablement inférieure à 0,1 % en poids.

3. Vis selon la revendication 1, **caractérisée en ce que** l'élément coupant (6, 7) se compose d'un métal avec une part de carbone supérieure à 1,0 % en poids, en particulier supérieure à 1,5 % en poids ou supérieure à 2,0 % en poids.

4. Vis selon la revendication 1, **caractérisée en ce que** les éléments coupants (6, 7) ne sont disposés que sur les cinq derniers pas du filet (5, 5', 5"), en particulier sur les trois derniers, particulièrement de préférence sur les deux derniers pas.

5. Vis selon la revendication 1, **caractérisée en ce qu'**au total moins de 15 éléments coupants (6, 7) sont prévus, en particulier moins de 10 éléments coupants (6, 7), particulièrement de préférence moins de cinq éléments coupants (6, 7).

6. Vis selon la revendication 1, **caractérisée par** un élément d'attaque (6) à l'extrémité du filet (5, 5', 5") attribuée à l'extrémité coupante de la vis (1).

7. Vis selon la revendication 6, **caractérisée en ce que** l'élément d'attaque (6) comparé aux autres éléments coupants (7) comporte une plus grande étendue le long du filet (5, 5', 5").

8. Vis selon la revendication 1, **caractérisée en ce que** au moins un élément coupant (6, 7) dépasse radialement vers l'axe longitudinal médian (4) par rapport au filet (5, 5', 5"), la saillie (a, a' , a") de l'élément coupant s'élevant tout au plus à 15 % de la profondeur du pas.

9. Vis selon la revendication 1, **caractérisée en ce que** au moins un élément coupant (6, 7) dépasse axialement en direction de l'axe longitudinal médian (4) par rapport au filet (5, 5', 5"), la saillie (b, b', b") de l'élément coupant (6, 7) s'élevant tout au plus à 15 % de la distance (A, A', A") que comportent les flancs (8, 8', 8") du filet (5, 5', 5") les uns par rapport aux autres au niveau de la transition vers le noyau (2).

10. Vis selon la revendication 1, **caractérisée en ce que** le noyau (2) et/ou l'élément coupant (6, 7) se compose d'un matériau amélioré ultérieurement.
